(19) Europäisches Patentamt
European Patent Office
Office européen des brevets

(11) **EP 3 686 071 B1**

(12) **EUROPEAN PATENT SPECIFICATION**

(45) Date of publication and mention
of the grant of the patent:
**23.06.2021 Bulletin 2021/25**

(51) Int Cl.:
***B60T 7/12*** *(2006.01)*

(21) Application number: **20151577.2**

(22) Date of filing: **14.01.2020**

(54) **AN EMERGENCY BRAKING METHOD**

NOTBREMSVERFAHREN

PROCÉDÉ DE FREINAGE D'URGENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2019 TR 201900981**

(43) Date of publication of application:
**29.07.2020 Bulletin 2020/31**

(73) Proprietor: **Ford Otomotiv Sanayi Anonim Sirketi
34885 Sancaktepe/Istanbul (TR)**

(72) Inventors:
• **BARUTCU, Guvenc
  34885 ISTANBUL (TR)**
• **KARAAGAC, Sercan
  34885 ISTANBUL (TR)**

• **ICOGLU, Oguz
  34885 ISTANBUL (TR)**
• **YALCIN, Ilhan Kubilay
  34885 ISTANBUL (TR)**

(74) Representative: **Dericioglu, E. Korhan
Ankara Patent Bureau
Kavaklidere Mahallesi Bestekar Caddesi No: 10
06680 Cankaya, Ankara (TR)**

(56) References cited:
**EP-A1- 2 835 292        WO-A1-2004/028847
DE-A1-102016 101 194   US-A1- 2011 125 372
US-A1- 2012 239 265    US-A1- 2017 361 796
US-A1- 2018 086 263    US-B1- 9 701 307**

EP 3 686 071 B1

## Description

## Technical Field

The present invention is related to an improved emergency braking system and a method thereof which is developed for gradually activating the brake in order to stop the vehicle even if the driver does not put on the brake at that moment when emergency braking of the motor vehicles is required.

## Prior Art

In many motor vehicles such as automobiles, commercial vehicles, heavy commercial vehicles etc., driving support and safety systems are used. One of the commonly used driving support systems is the system which is an advanced emergency braking system and it is known as AEBS (Advanced Emergency Braking System). The patent subject to the present application is an emergency braking system which operates in accordance with the regulations and legislations of the European Union.

AEBS system are driving support systems which improve the driving safety and prevent collision by means of braking vehicle automatically when the conditions in which the vehicle needs to brake, take place. AEB System warns the driver, and applies the brakes automatically if the distance with the lead vehicle is closing dangerously to avoid a collision situation that is detected to be imminent in cases of a drowsy driver, or due to other reasons that cause the driver not to respond to the traffic situation, and take control of the vehicle. Particularly, since heavy, light and medium commercial vehicles are used on long-distances frequently, said driving safety system is very important and is a safety feature for the vehicles of the specified type. Many vehicles are fitted with automatic emergency braking systems (AEBS) today. Many of mentioned systems have different approaches and solutions of how AEB System should work for detecting a collision to be imminent, assessing the risk of a collision, warning point in time, and duration, and content of the warning to get the attention of the driver, and emergency braking point in time, duration, emergency braking deceleration amount to avoid a collision or mitigate collision speed. In the patent subject to application, a different alternative is created to mentioned systems and a solution is provided.

AEB System detects an imminent collision that distance with the lead vehicle is dangerously closing through sensors on the vehicle, and avoids collision by braking. Said automatic emergency barking is performed in three phases; an audible-only warning phase, then an audible and haptic warning phase, and then at the last step emergency braking phase. Once system detect an imminent collision, in the first warning phase, of said process, system issues an audible warning for a short period of time up to one or several seconds. In the second phase, brakes are activated for a short duration in order to give a haptic warning to the driver to make the driver pay attention to the traffic situation. In case the driver does not take the control of the vehicle to avoid the collision, in the third phase, emergency braking is applied by the Advanced Emergency Braking System to avoid the collision.

AEBS system utilizes radar, and camera sensor outputs, and vehicle data as an input to calculate the risk of collision to obstacles in front, and once an imminent collision risk is detected, applies the three-phase warning, and braking procedure outlined above to avoid the collision. There are various studies, methods, and AEB Systems containing these methods with details that are publicly accessible. These studies, methods, and applications distinguishes from one another with the assessment of the collision risk, calculation of the starting point for the first warning-only phase, starting point of the second warning phase where haptic warning and audible warning is issued, starting point of the emergency braking phase, duration of the respective phase. There are various calculations as to when the emergency braking sequence shall be started. Since there are differences in the collision risk calculation, and the timing, and amount of the braking to be applied in currently used AEBS systems, each system may have advantages and disadvantages compared to one another.

The differences of this patent application compared to known AEB System applications and related patents in this field compared to this application are listed below:

In the United Nations patent document No US2015066323 A1 (EP 2 835 292) included in the present state of the art, an emergency brake support system is disclosed. In said document, speed, object and acceleration sensors provide data to a control unit. The system provides brake support until the relative speed between the encountered object and the vehicle decreases to zero according to the data obtained. At the same time, similarly the relative acceleration data is also checked. However, the document does not contain a description of the calculation method for the determining a collision risk, and when to brake.

In the United Nations patent document No US2015012204 A1 included in the current state of the art, a brake support system is described and in said system, instant relative conditions are obtained and braking timings, accelerations and distances of the two vehicles are transferred to the system. The system is operated by obtaining the necessary data with a number of equations in which vehicle speeds are equalized and distances are used. However, in said document, there is only one equation used to cover all cases, and all AEB System phases, on contrary to our patent application where we use several equations to cover different cases.

In the German patent document No DE102005054064 A1 included in the present state of the art, an acceleration based calculation method is described. In said document, according to the changes in acceleration, required deceleration values are calculated for all three phases of the AEB System based on stopping distances, and calculated information is sent to warning, and braking systems on the vehicle. However in this document, there is no detailed information about the integration of the data to the system and use of data in the system.

In the International patent document No WO 2004/028857 A1 included in the present state of the art, the process flow of an AEB System is provided; however calculation method is not fully explained with mathematical formulations. In said document, it is suggested that the warning time value can be calculated as a variable. In the patent subject to application, the warning period is taken as constant.

In the United Nations patent document No US 7425043 B2 included in the present state of the art, a general braking flow and calculation method is disclosed. In said document, the equations related to the calculation of the braking moment are explained in details. The speed and acceleration difference between the ego vehicle and the vehicle in the front are used in the calculation of the distance by means of these equations. The braking moment can be calculated by using said equations and given flow diagram. The patent in question uses a completely different method and variables for the application of emergency braking and detection of the driving hazard.

In the patent subject to application, the distance between the ego vehicle (our vehicle) and the vehicle in front and the appropriate triggering moment are found by means of calculating the time at which the braking speeds of the ego vehicle and the vehicle in front are equalized. Difference of the distances traveled by the ego vehicle and the vehicle in front during the time elapsed until said equalizing moment gives a safe minimum tracking distance. If the distance between the ego vehicle and the vehicle in front is less than the minimum tracking distance, the emergency braking sequence is triggered. Equalization of velocities and calculations of the traveled distance are calculated by considering the linear intersection points in three time intervals.

**Aims of the Invention**

The aim of this invention is to realize an emergency braking system and a method that determines when the warning and braking steps in the emergency braking process start with calculating the time at which the speeds of the ego vehicle and the vehicle in front are synchronized by braking, and finding the braking sequence by calculating the time at which said speeds are equalized.

Another aim of the invention is to provide an emergency braking system and a method which initiates the emergency braking sequence when the distance between the ego vehicle and the vehicle in front is less than the minimum tracking distance.

Another aim of the invention is to provide an emergency braking system and method which enables the calculation of the latest/minimum distance for braking initiation through one of the six different algorithms as a result of comparing the time elapsed until the speed of the vehicle in front is zero and the time elapsed until the speed of the ego vehicle is equal to the speed of the vehicle in front.

**Brief Description of the Invention**

In order to reach the aim of this invention, an emergency braking system and method is described as defined in the first claim and the other claims which are dependent thereof. In the emergency braking method, if the distance between the ego vehicle and the vehicle in front is less than the preferred distance, the braking sequence is initiated and braking is performed in three stages. During the braking process, an audible and/or visual warning is given at the first stage, then a partial braking is performed at the stage called haptic warning and if there is no response from the driver during this process, the third stage is realized and the vehicle is stopped by full braking. In the braking method, the distances traveled by the ego vehicle and the vehicle in front and the difference between these two distances are very important. The difference between said two distances is determined by the safe tracking distance or the distance at which the braking should start at the last stage. Together with the method subject to the application, a solution is brought by a different equation for each case. Together with the method subject to the application, the safe tracking distance, in other words the difference between the distance taken by the vehicle in front and the ego vehicle is found by means of calculating six different equations for different situations. Determination of which of the six equations to solve the safe tracking distance is done by following the process steps and the flow. The sequence and the equation calculations of said method are preferably recalculated every 10 milliseconds. Accordingly, safe tracking distance is calculated and updated instantly and continuously. If the distance between the ego vehicle and the vehicle in front is less than the calculated safe tracking distance, in other words, if the ego vehicle approaches to the vehicle in front less than the safe tracking distance, the braking sequence is initiated.

Different procedures are performed in the process steps of the method subject to the invention. One of these procedures is to check whether the vehicle in front brakes or not and to compare at which stage the vehicle in front will stop with the ego vehicle. Three separate time durations are then calculated. These durations are used for calculating the speed, moment (time) and stage of the ego vehicle at the stop time of the vehicle in front. Subsequently the time (moment) at which the speeds of two vehicles are equal is calculated. It is determined at which stage braking is not necessary by means of finding the moment when the speeds of two vehicles are equal. The selection stage is reached by looking at the differences between the stop time of the vehicle in front and the equalization time when the speed of the ego vehicle is equal to the speed of the vehicle in front. At this stage, it is determined which safe tracking distance will be used according to the comparison of stop time being smaller or bigger or equal than the equalization time.

The stop time (t_still) of the vehicle in front is checked. If the stop time of the vehicle in front is outside the braking sequence (after the speed equalization moment or never), one of the first three equations is selected. The separation of these three equations is made according to the stage at which the speeds of the ego vehicle and the vehicle in front are equalized. One of three equations is selected depending on whether the speeds are equal at the audible/visual warning stage, at the haptic (partial braking) stage or at the full (emergency) braking stage or not.

If the stop time of the vehicle in front (t_still) is within the braking sequence, then one of the other three equations is selected. Similarly the separation of these three equations is made according to the stage at which the speeds of the vehicle in front and the ego vehicle are equalized. One of three equations is selected depending on whether the speeds are equal at the audible/visual warning stage, at the haptic (partial braking) stage or at the full (emergency) braking stage.

In said six equality equations that calculates the safe tracking distance, the difference between the distances taken by the ego vehicle and the vehicle in front is calculated. If the vehicle in front does not stop within the speed equalization time, the safe tracking distance is selected by the first three equality equations. If it stops, the other three equality equations are selected.

**Detailed Description of the Invention**

The emergency braking system and method thereof realized for fulfilling the aim of this invention is shown in the attached drawings, in which;

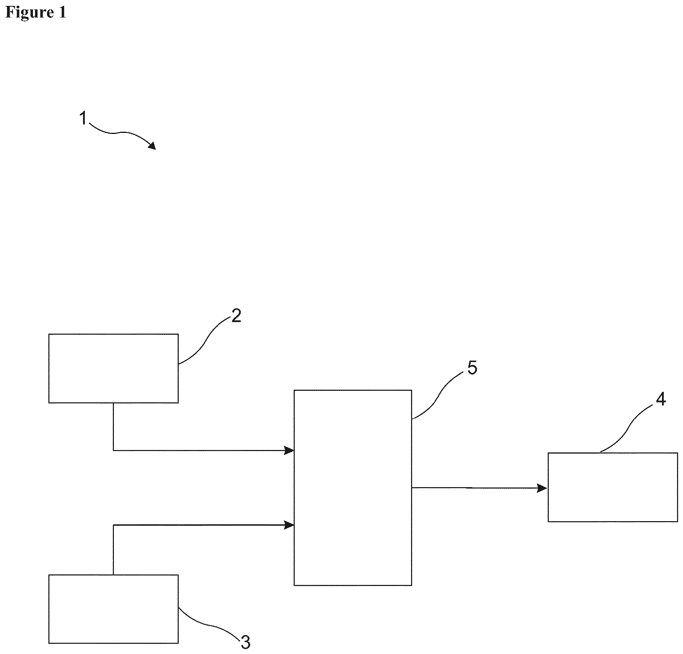

Figure 1 is a schematic view of the emergency braking system.

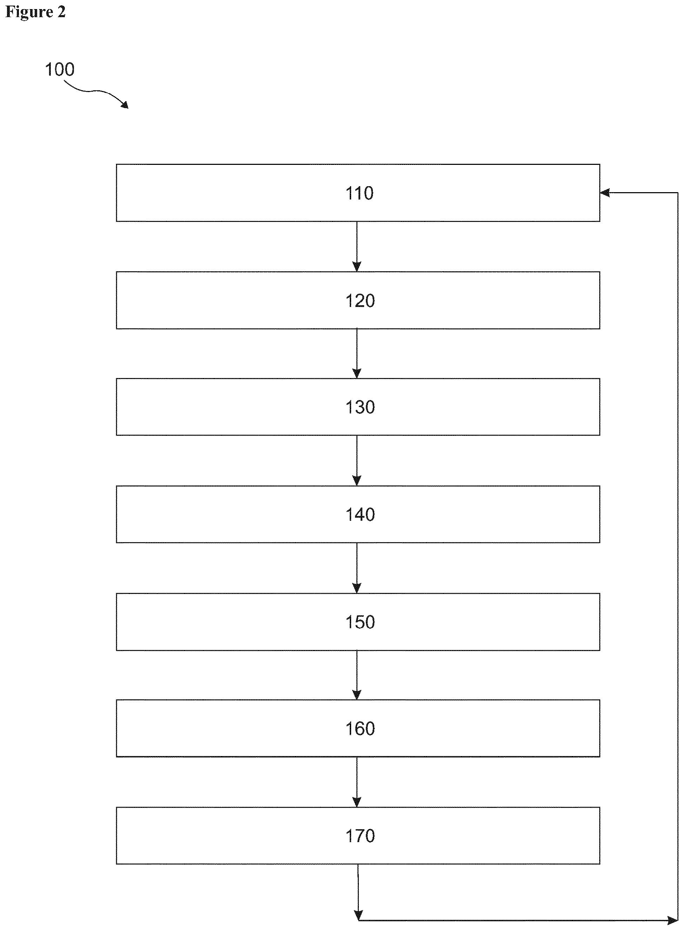

Figure 2 is a schematic view of the emergency braking method.

The parts in the figures are enumerated one by one, corresponding numbers are given below.

**1.** Emergency braking system
**2.** Camera
**3.** Radar
**4.** Brake mechanism
**5.** Control unit

**100.** Emergency breaking method

An emergency braking system (1) which is developed for gradually braking the vehicle by being activated even if the driver does not put on the brake at that moment when emergency braking of the motor vehicles is required, for calculating when the warning and braking steps in the emergency braking process start and for calculating the time at which the speed of the vehicle in front and the ego vehicle are synchronized, comprising;

- at least one camera (2) which is located in different parts of the vehicle, receives processed images from the environment and front portion of the vehicle,
- at least one radar (3) which is adapted for detecting vehicles in the front, travelling in the same direction and lane with the ego vehicle, objects in the direction of travel of the ego vehicle and for measuring the distance between the ego vehicle and said vehicle in front or objects,
- at least one braking mechanism (4) which is of hydraulic or electronic structure and which causes the vehicle to decelerate or stop by pressure applied to the wheels of the vehicle or by the change in the engine speed,
- at least one control unit (5) which is adapted for determining whether there is a vehicle in front of the vehicle by means of processing the images received from the camera (2) and the measurement values received from the radar (3), calculating the speed of the vehicle in front tracking distance between the ego vehicle and the vehicle in front, if said distance is less than the safe tracking distance, initiating the three-stage braking sequence by calculating the time at which the speed of the ego vehicle is equalized with the speed of the vehicle in front and continuing the braking process until the tracking distance reaches to the safe tracking distance value.

The emergency braking system (1) is a driver support and safety system which is used for providing driving safety. The emergency braking system (1) can be brought to active or passive form. In case the emergency braking system (1) is active, the detection of the vehicle in front is made by the camera (2) and the radar (3). The tracking distance between the vehicle/vehicles in front are controlled continuously by the data received from the camera (2) and the radar (3) and a braking sequence which includes certain processes is applied to the ego vehicle, in case safety driving is determined to be dangerous in any way. During driving, sometimes the driver may lose his/her attention, the driver may sleep or the tracking distance with the vehicle in front may take a dangerous form by the incorrect motions of the other vehicles, thus the driving safety becomes dangerous. In such cases, the emergency braking system (1) keeps the tracking distance between the ego vehicle and the vehicle in front in safe driving distance by means of being automatically activated, in some cases even stopping the ego vehicle completely.

In the emergency braking system (1), the braking process (sequence) and braking is realized over three basic stages. The warning stage is realized when the braking process is started at the first echelon. The warning stage is preferably a short-term stage and said period can be extended in a preferred manner. In an embodiment of the invention, the warning period is preferably about one second. In the emergency braking system (1), after the danger is detected, the first stage of the automatic braking starts and a warning is given during approximately one second. Said warning can be an audible and luminous warning. In case there is no reaction from the driver during the first warning stage, then the second stage is initiated. In the second stage of braking process, the brake mechanism (4) is used and said warning is called haptic warning. In the second stage, in order to give a small warning to the driver, control unit (5) operates the braking mechanism (4) to provide a physical (partial) braking which is preferably approximately one second. In case the driver does not give any reaction to the physical braking in the second case, the third stage is initiated. The third stage is called as the emergency (full) break stage. In the emergency braking stage, in order to stop the car, the control unit (5) enables stopping the ego vehicle completely by means of using the braking mechanism (4).

The camera (2), radar (3), brake mechanism (4) and the control unit (5) which are used in the emergency braking system (1) subject to the invention are preferably the standard used equipment of the vehicle. The control unit (5) used in the patent subject to application is adapted for controlling the brake mechanism (4) by means of the signals received from the camera (2) and the radar (3) and the subsequent measurement values. The control unit (5) is preferably an electronic control unit of the vehicle named as ECU. The control unit (5) is adapted to determine whether unsafe driving occurs or not, when to start braking, when to pass to braking stages, what steps to follow in the braking stages, when to complete the braking process and to control the braking process from the beginning to the end. The control unit (5), which controls said braking process also follows some process steps. The control unit (5) monitors the driving instantly and when the driving safety is compromised, it applies the emergency braking method (100). Operation of the control unit (5) and control of the emergency braking system (1) are enabled by means of the emergency braking method (100).

Most important stages of the emergency braking method (100) are to decide that the automatic braking should initiate, analyze the starting time of braking, start braking and complete each stage by means of passing to the progressive brake within the braking sequence. Steps of the emergency braking method (100) determine all procedures and timing of said breaking sequence.

Inputs used by the emergency braking system (1) and the method (100) thereof are as follows;

**v:** speed of the vehicle in meter/second (m/s),
**v_rel:** relative speed of the vehicle in front in meter/second (m/s),
**a:** acceleration of the vehicle in meter/second square (m/s$^2$),
**a_rel:** relative acceleration of the vehicle in front (m/s$^2$),
**d:** the distance to the vehicle in front in meter (m),
**a_NB:** emergency (full) braking amount in meter/second square (m/s$^2$),
**a_TB:** partial braking haptic warning in meter/second square (m/s$^2$),
**t_h:** haptic warning period in second (s),
**t_oa:** audio/visual warning period in second (s).

The emergency braking system (1) and method (100) generate braking request, braking amount and duration as an output signal in relation with the above inputs.

The variables which are used by the emergency braking system (1) and method (100) are as follows;

**d_z:** minimum distance (minimum tracking distance) left with the vehicle in front
**d_safe:** safe tracking distance (in case approaching to the vehicle in front more than this calculated distance occurs, the braking sequence shall be started.)
**v_v:** the speed of the vehicle in front
**t_tc:** time to collision

**a_v:** acceleration of the vehicle in front

**a_rel_h:** relative acceleration during haptic brake

**t_w:** total period that passes until the emergency braking stage

**v_oa:** the speed of the ego vehicle at the end of the audial warning stage

**v_h:** the speed of the ego vehicle at the end of the haptic warning stage

**t_stop:** stop time of the vehicle (the duration between the time when the braking sequence starts and the time it stops)

**t_still:** stop time of the vehicle in front (In case the present acceleration is continued, the time until the vehicle in front reaches to a still point)

**t_eq:** estimated speed equalization time (the time when speed of the ego vehicle is equalized with the vehicle in front by means of braking)

**t_eq1:** first estimated speed equalization time

**t_eq2:** second estimated speed equalization time

**t_eq3:** third estimated speed equalization time

**t_eq_stage:** information about the braking stage in which realization of the speed equalization moment occurs

**equation 1:** first equality equation

**equation 2:** second equality equation

**equation 3:** third equality equation

**equation 4:** fourth equality equation

**equation 5:** fifth equality equation

**equation 6:** sixth equality equation

An emergency braking method (100), for motor vehicles that enables the vehicle to brake in an automatic manner that is triggered when the distance between the vehicle in front is calculated to be less than the minimum distance (d_z), enables determining the starting time for braking by calculating the time when the speed of the ego vehicle and the vehicle in front are equalized, initiates braking at said time, enables three-stage (phase) braking within the braking sequence, comprising;

- receiving (110) measurement data from the camera (2) and the radar (3) located on the vehicle,
- calculating (120) the time until it stops, in case the braking sequence is initiated according to the measurement data received from the camera (2) and the radar (3) by the control unit (5) (if braking sequence has started),
- calculating (130) the time elapsed until the speed of the ego vehicle is equalized with the vehicle in front, in case the braking sequence is initiated according to the measurement data received from the camera (2) and the radar (3) by the control unit (5) (if braking sequence has started),
- finding (140) at which warning/braking stage the time of speed equalization with the vehicle in front occurs,
- calculating (150) the latest and minimum braking initiation distance (d_safe) by means of selecting one of the six different equations according to the result of the comparisons of whether the stage of warning/braking when the speed equalization moment is realized or not and the moment at which the vehicle in front reaches the stopping point is realized in the braking process or not,
- starting (160) the braking sequence if the distance to the vehicle in front measured instantly is less than or equal to the calculated minimum braking start distance,
- going back to the beginning in order to make the calculation again, observing (170) the changing vehicle dynamics again.

The emergency braking method (100) constitutes the operation algorithm of the control unit (5) in the emergency braking system (1). The control unit (5) automatically causes the vehicle to brake in order to provide safe driving and safe tracking distance by means of using the emergency braking method (100).

The emergency braking method (100) decides in which case the vehicle is required to start the three-stage braking sequence and then the braking sequence is started. Calculating the required time of starting said braking sequence is made by means of the calculation of the distance and the time tracking.

The emergency braking method (100) is automatically activated during driving of the vehicle; it operates in a continuous manner during the drive. The control unit (5) continuously and instantly receives the measurement data from the camera (2) and the radar (3) which are located on the vehicle. The control unit (5) receives the speed information of the ego vehicle of that time from the speed sensor of the vehicle or the electronic control unit of the vehicle instantly. The control unit (5) is able to determine whether there is any vehicle in front or not, and if there is, the location of the vehicle in front by means of the signals received from the camera (2) and the radar (3).

When the control unit (5) determines the relative speed (v-rel) of the vehicle in front, it receives the instant speed of the vehicle by means of using the measurement values taken from the camera (2) and the radar (3). The control unit (5) calculates the relative speed (v_rel) of the vehicle in front by means of the instant speed of the ego vehicle (V) and the measurement values received from the camera (2) and the radar (3). In the step (110) of receiving the measurement data, the relative speed (v_rel) of the vehicle in front is compared with the speed (v) of the ego vehicle. In case the relative speed of the vehicle in front with the respect to the ego vehicle is less than zero, then it is deemed that the distance between the vehicles is extended and in case the speed of the ego vehicle (our speed) is bigger than (v), then it means that the vehicle in front is coming towards the ego vehicle from the opposite lane. Said conditions can be formulates as follows.

v_rel <= 0

v_rel >= v

In both of the cases, braking is not required, for this reason the emergency braking sequence is not initiated. The data received from the camera (2) and the radar (3) are continued to be handled and the next step is not started.

The control unit (5) obtains the data in relation with the distance (d) to the vehicle in front, relative speed information (v_rel) of the vehicle in front, the speed of the vehicle itself (v), the acceleration (a) of the vehicle itself, relative acceleration (a_rel) of the vehicle in front according to the data received from the camera (2) and the radar (3). In an alternative embodiment of the invention, mentioned data are received from the vehicle in the front directly by means of maintaining a wireless communication with the vehicle in front.

There are parameters such as the braking amount etc. for each stage of the emergency braking recorded within the control unit (5). In accordance with the features of the vehicle, in the control unit (5), all data such as braking stopping curves of the vehicle, parameters, stop durations, reactions to the braking intensity and stop durations etc. are recorded. The control unit (5) searches a solution to the "if I have started braking during calculation time, at which time my speed with the vehicle in front would be equal "question by means of comparison and calculation by using the braking and stopping etc. data of the vehicle.

According to the measurement data received from the camera (2) and the radar (3), the control unit (5) calculates (120) the time that elapses until the vehicle stops in case of the start of braking sequence. The control unit (5)determines (120) whether the distance between the vehicle in front and the ego vehicle is less than the safe tracking distance or not according to the measurement data received from the camera (2) and the radar (3). In this step, the stop time (t_stop) of the ego vehicle is calculated by the control unit (5) according to the stage when the ego vehicle stops. The stop time (t_stop) of the vehicle corresponds to the time that elapses from the starting moment of the braking sequence until the vehicle stops. Since the emergency braking method (100) has three stages, the control unit (5) provides separate solutions for each of the three stages. Subsequently, the safe tracking distance is found by the difference between the calculated distances traveled until the stop time (t_stop) by the ego vehicle and the vehicle in front.

In the step of calculating (120) the time that elapses until the vehicle stops in case of the start of braking sequence,; if the speed of the ego vehicle at the end of the audible warning (v-oa) stage is less than zero or equal to zero, then the stop time (t_stop) of the ego vehicle is found by means of dividing the speed of the vehicle by its acceleration. This process can be formulated as follows.

$$v\_oa <= 0; \qquad t\_stop = -v/a$$

In the step of calculating (120) the time that elapses until the vehicle stops in case of the start of braking sequence; if the speed of the ego vehicle (v_h) is equal to zero or smaller than zero at the haptic warning stage, stop speed of the vehicle (t_stop) is found by dividing the speed of the vehicle (v_oa) at the end of the audible warning stage by the haptic warning braking amount (a_TB) and by adding audio/visual warning duration (t_oa) to the obtained result. This process can be formulated as follows.

$$v\_h <= 0; \qquad t\_stop = t\_oa + (-v\_oa/a\_TB)$$

The stop time of the vehicle (t_stop) is calculated as follows; the audio/visual warning duration (t_oa) and haptic warning duration (t_h) are added and the time obtained by dividing the ego vehicle's speed at the end of the haptic warning stage by the amount of emergency braking is added to this duration. The stop speed of the vehicle (t_stop) is formulated as follows.

$$t\_stop = t\_oa + t\_h + (-v\_h/a\_NB)$$

According to the measurement data (5), the control unit (5) calculates (130) the time that elapses until the speed with the vehicle in front is equalized in case of the start of braking sequence. In said step, the equalization time that corresponds to the moment when the speeds of the vehicle in front and the ego vehicle are equalized, is calculated.

While making calculation in this step, there are again three stages under consideration; audible warning stage, haptic warning (partial braking) stage and emergency braking (final full braking) stage. The emergency braking method (100) calculates three separate speed equalization times. Among said three separate equalization times, the first one is (t_eq1), the second one is (t_eq2) and the third one is (t_eq3) and, they are calculated with the following different formulas.

$$t\_eq1= (v-v\_v)/(a\_v-a);$$

$$t\_eq2 = (v\_v-v-a*t\_oa+a\_TB*t\_oa)/(a\_TB-a\_v);$$

$$t\_eq3=(v\_v-v-a*t\_oa-a\_TB*t\_h+a\_NB*t\_w)/(a\_NB-a\_v);$$

Together with said three separate equations, the three separate times that elapse until the speed of the ego vehicle is equalized with the vehicle in front, are calculated, and the process steps are proceeded by selecting one of these equalization times. t_eq1 value shows the speed equalization time in case the speed equalization is at audible warning stage, t_eq2 value shows the equalization time in case the speed equalization is at haptic warning stage and t_eq3 value shows the speed equalization time to be calculated in case the speed equalization is realized at the last emergency braking stage. In order to select one of these times, the following equations and assumptions are used.

$$t\_eq3 > t\_w; \quad t\_eq\_stage = 3; \qquad t\_eq = t\_eq3;$$

$$t\_eq2 > t\_oa \text{ ve } t\_eq2 <= t\_w \text{ ise } t\_eq\_stage = 2; t\_eq = t\_eq2;$$

$$t\_eq1 > 0 \text{ ve } t\_eq1 <= t\_oa \text{ ise } t\_eq\_stage = 1; t\_eq = t\_eq1;$$

$$t\_eq\_stage = 0; t\_eq = -1;$$

The stage of the speed equalization (t_eq_stage) is decided as a result of comparing respectively the t_eq1, t_eq2 and t_eq3 values with t_w (t_h + t_oa total warning duration), t_oa (haptic warning duration).
The control unit (5) makes a comparison (140) between the time that elapses until the stop of the vehicle in front and the time that elapses until the speed of the ego vehicle is equal with the speed of the vehicle in front. The control unit (5) checks the moment at which the speeds of the vehicle in front and the ego vehicle are equalized. Changes in the speed of the vehicles may need to be interpreted in different manners. The ego vehicle can also brake but the negative acceleration is valid until the ego vehicle stops. In this case, the speed equalization moment of the two vehicles cannot occur after the stop time of the ego vehicle.
In the step of comparing (140) the time that elapses until the stop time of the vehicle in front with the time that elapses until the speed of the ego vehicle is equal to the vehicle in front; estimated speed equalization time (t_eq) and the stop time of the ego vehicle (t_stop) are compared. Estimated speed equalization time (t_eq) gives the moment at which the ego vehicle's speed is equalized with the vehicle in front by means of braking. It is checked whether the estimated speed equalization time (t_eq) is bigger, smaller or equal than/to the stop time of the ego vehicle (t_stop). The comparison formulations made in said step are as follows.

$$t\_eq > t\_stop; \qquad t\_eq == -1; \qquad t\_eq = t\_stop$$

After the stop time of the vehicle in front is compared (140) with the time that elapses until the speed of the ego vehicle is equal to the speed of the vehicle in front , the calculation (150) of the latest and minimum braking initiation distance (d_safe) is calculated by means of selecting one of the six different equations based on the result of the comparison. The safe tracking distance (d_safe) is the variable which determines the initiation of the braking sequence in case the distance to the vehicle in front is closer than the calculated distance. In the step of calculating (150) the latest and minimum braking initiation distance, first of all, the stop time (t_still) of the vehicle in front is controlled. In case the vehicle in front continues its current acceleration, the stop time of the vehicle in front (t_still) gives the duration until it comes to a standstill position. If the stop time of the vehicle in front (t_still) is out of the braking sequence, then one of the first three equations is selected. The calculation is made by selecting the one which provides the appropriate speed equalization moment among the three equations. If the stop time of the vehicle in front (t_still) is within the braking sequence, one of the other three equations is selected. While one of said three equations is selected, equation selection is made by means of determining the range that corresponds to the estimated speed equalization time (t_eq) in the sequence.

The stop time of the vehicle in front (t_still) is determined whether it is within or outside the braking sequence according to the following formula.

$$a\_v < 0; \qquad t\_still = -v\_v/a\_v;$$

$$t\_still = Infinite \quad (Infinitely\ big)$$

$$t\_still < 0; \qquad t\_still > t\_eq$$

If the acceleration of the vehicle in front (a_v) is less than zero, the stop time of the vehicle in front (t_still) is obtained by means of dividing the speed of the vehicle in front (v_v) by the acceleration of the vehicle in front (a_v). After the stop time of the vehicle in front (t_still) is calculated, the control unit (5) determines whether the stop time of the vehicle in front (t_still) is less than zero or not and whether it is bigger than the estimated speed equalization time (t_eq) or not.

If the stop time (t_still) is outside the braking sequence, one of the three equations is selected. If the stop time of the vehicle (t_still) is less than zero and bigger than the estimated speed equalization time (t_eq), one of the equations among the first equation formula (Equation 1) or second equation formula (Equation 2) or third equation formula (Equation 3) is selected.

Equation 1 is as follows and in case equation 1 is selected, then the following processes are realized. If the estimated speed equalization time (t_eq) is greater than the total duration (t_w) that elapses until the emergency braking stage (t_eq > t_w) then said first equality equation (equation 1) is used.

$$d\_safe = v*t\_oa+0.5*a*t\_oa\wedge2 + v\_oa*t\_h+ 0.5*a\_TB*t\_h\wedge2 + v\_h*(t\_eq-t\_w)+$$

$$0.5*a\_NB*(t\_eq-t\_w)\wedge2 + d\_z - (v\_v*(t\_eq)+0.5*a\_v*(t\_eq)\wedge2);$$

The speed equalization in this formula under the condition t_eq > t_w (equalization during emergency braking stage) is solved by the kinematic equations of the difference between the distance traveled by the ego vehicle and the distance traveled by the vehicle in front.

Equation 2 is as follows and in case equation 2 is selected, then the following processes are realized. If the estimated speed equalization time (t_eq) is greater than the total duration (t_w) that elapses until the emergency braking stage (t_eq > t_w) or if it is equal (t_eq <= t_w) and if the estimated speed equalization time (t_eq) is greater (t_eq > t_oa) than the audio/visual warning period (t_oa), then second equality equation (equation 2) is used.

$$d\_safe = v*t\_oa+0.5*a*t\_oa\wedge2 + v\_oa*(t\_eq-t\_oa)+0.5*a\_TB*(t\_eq-t\_oa)\wedge2 + d\_z$$

$$-(v\_v*(t\_eq)+0.5*a\_v*(t\_eq)\wedge2);$$

The speed equalization in this formula under the condition t_eq <= t_w and t_eq > t_oa (equalization during haptic warning stage) is solved by the kinematic equations of the difference between the distance traveled by the ego vehicle and the distance traveled by the vehicle in front.

Equation 3 is as follows and in case equation 3 is selected, then the following processes are realized. If the estimated speed equalization time (t_eq) is greater than zero (t_eq > 0) and if the estimated speed equalization time (t_eq) is smaller than or equal to (t_eq <= t_oa) the audio/visual warning period (t_oa), then third equality equation (equation 3) is used.

$$d\_safe = v*t\_eq+0.5*a*t\_eq^2 + d\_z -(v\_v*(t\_eq)+0.5*a\_v*(t\_eq)^2);$$

The speed equalization in this formula under the condition t_eq> 0 and t_eq <= t_oa (equalization during audible warning stage) is solved by the kinematic equations of the difference between the distance traveled by the ego vehicle and the distance traveled by the vehicle in front.

If the stop time (t_still) is within the braking sequence, one of the other three equations is selected. If the stop time (t_still) of the vehicle is less than zero and is not greater than the estimated speed equalization time (t_eq), one of the fourth equality formula (Equation 4) or fifth equality formula (Equation 5) or sixth equality formula (Equation 6) is selected.

Equation 4 is as follows and in case equation 4 is selected, then the following processes are realized. If the estimated speed equalization time (t_eq) is greater (t_eq > t_w) than the total duration (t_w) that elapses until the emergency braking stage, said fourth equality equation (equation 4) is used.

$$d\_safe = v*t\_oa+0.5*a*t\_oa^2 + v\_oa*t\_h+ 0.5*a\_TB*t\_h^2 + v\_h*(t\_eq-t\_w)+$$
$$0.5*a\_NB*(t\_eq-t\_w)^2 + d\_z - (v\_v*(t\_still) +0.5*a\_v*(t\_still)^2);$$

Equation 5 is as follows and in case equation 5 is selected, then the following processes are realized. If the estimated speed equalization time (t_eq) is smaller than or equal to (t_eq <= t_oa) the total period (t_w) that elapses until the emergency braking stage, and if the estimated speed equalization time (t_eq) is bigger (t_eq > t_oa) than the audio/visual warning period (t_oa), then fifth equality equation (equation 5) is used.

$$d\_safe = v*t\_oa+0.5*a*t\_oa^2 + v\_oa*(t\_eq-t\_oa)+0.5*a\_TB*(t\_eq-t\_oa)^2 + d\_z$$
$$-(v\_v*(t\_still)+0.5*a\_v*(t\_still)^2);$$

Equation 6 is as follows and in case equation 6 is selected, then the following processes are realized. If the estimated speed equalization time (t_eq) is greater than zero (t_eq > 0), and if the estimated speed equalization time (t_eq) is smaller than or equal to (t_eq <= t_oa) the audio/visual warning period, then sixth equality equation (equation 6) is used.

Equation 6

$$d\_safe = v*t\_eq+0.5*a*t\_eq^2 + d\_z -(v\_v*(t\_still) + 0.5*a\_v*(t\_still)^2);$$

Safe tracking distance (d_safe) is calculated (150) by selecting one of the six equality equations depending on whether the stop time (t_still) is in or out of the braking sequence. During driving, if the measured distance (d_z) to the vehicle in front is less than or equal to the calculated minimum braking initiation distance (d_safe), braking sequence is initiated (160). When the braking sequence is initiated (160), the control unit (5) provides the braking to be performed in three stages respectively. After the breaking sequence is initiated (160), an audio/visual warning is given at the first stage. The audio/visual warning period (t_oa) continues during approximately one second. In case there is no response from the driver during said warning period (t_oa), the second stage which is the haptic warning stage is initiated. The control unit (5) allows the vehicle to perform warning brake by means of the break mechanism (4) during the haptic warning period (t_h) in the haptic warning stage. The haptic warning period (t_h) is preferably approximately one second and during said period of time (t_h), physical brake is applied to the vehicle. If the driver does not give any response during the haptic warning stage, the third stage is initiated and the control unit (5) enables the vehicle to stop completely by using the braking mechanism (4). Accordingly, the period of the required emergency braking is determined, a two-stage warning is given to the driver in order to make the driver react, and if the driver does not give any response, then the vehicle is stopped completely in an automatic manner.

After the braking sequence is initiated and completed (160), the changed vehicle dynamics are reviewed (170) by reapplying the first step (110), and then the emergency braking method (100) is restarted.

The safe tracking distance between the vehicle in front and the ego vehicle is continuously measured instantly by means of the method (100) subject to the application. The braking sequence is initiated depending on whether the vehicle in front brakes or not, and if brakes, whether it stops or not. Accordingly, driver independent emergency braking of the vehicle is enabled.

**Claims**

1. An emergency braking method (100), for motor vehicles that enables the vehicle to brake in an automatic manner that is triggered when the distance between the vehicle in front is calculated to be less than the minimum distance (d_z), enables determining the starting time for braking by calculating the time when the speed of the ego vehicle and the vehicle in front are equalized, initiates braking at said time, enables three-phase braking within the braking sequence, the method **comprising** the following steps;

   - receiving (110) measurement data from a camera (2) and a radar (3) located on the vehicle,
   - calculating (120) the time until it stops, in case the braking sequence is initiated according to the measurement data received from the camera (2) and the radar (3) by a control unit (5) (if braking sequence has started); and **characterized in that**
   - calculating (130) the time elapsed until the speed of the ego vehicle is equalized with the vehicle in front, in case the braking sequence is initiated according to the measurement data received from the camera (2) and the radar (3) by the control unit (5) (if braking sequence has started),

     - finding (140) at which warning/braking stage the time of speed equalization with the vehicle in front occurs,
     - calculating (150) the latest and minimum braking initiation distance (d_safe) by means of selecting one of the six different equations according to the result of the comparisons of whether the stage of warning/braking when the speed equalization moment is realized or not and the moment at which the vehicle in front reaches the stopping point is realized in the braking process or not,
     - starting (160) the braking sequence if the distance to the vehicle in front measured instantly is less than or equal to the calculated minimum braking start distance,
     - going back to the beginning in order to make the calculation again, observing (170) the changing vehicle dynamics again,

2. An emergency braking method (100) according to claim 1, **characterized in that;** in the calculation (130) step of the time that elapses until the speed is equalized with the vehicle in front if the braking sequence has started; calculating three different speed equalization time for the audible warning stage, haptic warning stage and emergency braking (final braking) stage and using only one of said times.

3. An emergency braking method (100) according to claim 2, **characterized in that;** in the calculation (130) step of the time that elapses until the speed is equalized with the vehicle in front if the braking sequence has started; calculating the first estimated speed equalization time (t_eq1) with the equation (v-v_v)/(a_v-a); second estimated speed equalization time (t_eq2) with the equation (v_v-v-a*t_oa+a_TB*t_oa)/(a_TB-a_v); the third estimated speed equalization time (t_eq3) with the equation (v_v-v-a*t_oa+a_TB*t_oa)/(a_TB-a_v).

4. An emergency braking method (100) according to claim 1, **characterized in that;** in the step of finding (140) at which warning/braking stage the time of speed equalization with the vehicle in front occurs; comparing the estimated speed equalization time (t_eq) with the stop time of the vehicle (t_stop), determining whether the estimated speed equalization time (t_eq) is greater than or equal to the stop time of the vehicle (t_stop).

5. An emergency braking method (100) according to claim 1, **characterized in that;** in the step of calculating (150) the latest and minimum braking initiation distance (d_safe) by means of selecting one of six different equations; controlling the stop time of the vehicle in front (t_still), if the stop time of the vehicle in front (t_still) is outside the braking sequence; selecting one of the first equality equation **(equation 1)** or the second equality equation **(equation 2)** or the third equality equation **(equation 3).**

6. An emergency braking method (100) according to claim 1, **characterized in that;** in the step of calculating (150) the latest and minimum braking initiation distance (d_safe) by means of selecting one of six different equations; controlling the stop time of the vehicle in front (t_still), if the stop time of the vehicle in front (t_still) is within the braking sequence; selecting one of the fourth equality equation **(equation 4)** or fifth equality equation **(equation 5)** or sixth equality equation **(equation 6).**

7. An emergency braking method (100) according to claim 1, **characterized in that;** in the step of calculating (150) the latest and minimum braking initiation distance (d_safe) by means of selecting one of six different equations; together with determining the range in the sequence which corresponds to the estimated speed equalization time (t_eq) moment, selecting one of the first equality equation **(equaition 1),** the second equality equation **(equation**

2) or the third equality equation **(equation 3)** fourth equality equation **(equation 4)** or fifth equality equation **(equation 5)** or sixth equality equation **(equation 6).**

8. An emergency braking method (100) according to claim 1, **characterized in that;** in the step of calculating (150) the latest and minimum braking initiation distance (d_safe) by means of selecting one of six different equations; if the acceleration of the vehicle in front (a_v) is smaller than the zero, finding the stop time of the vehicle (t_still) by diving the speed of the vehicle in front (v_v) by the acceleration of the vehicle in front (a_v).

9. An emergency braking method (100) according to claim 1, **characterized in that;** in the step of calculating (150) the latest and minimum braking initiation distance (d_safe) by means of selecting one of six different equations; after calculating stop time of the vehicle (t_still), control unit's (5) comparing whether the stop time of the vehicle (t_still) is smaller than zero or not and is bigger than the estimated speed equalization time (t_eq) or not.

10. An emergency braking method (100) according to claim 5, **characterized in that;** in the step of calculating (150) the latest and minimum braking initiation distance (d_safe) by means of selecting one of six different equations; if the estimated speed equalization time (t_eq) is greater than the total period (t_w) that elapses until the emergency braking stage (t_eq > t_w), calculating the minimum braking initiation distance (d_safe) with said first equality equation (equation 1).

11. An emergency braking method (100) according to claim 5, **characterized in that;** in the step of calculating (150) the latest and minimum braking initiation distance (d_safe) by means of selecting one of six different equations; if the estimated speed equalization time (t_eq) is smaller than or equal to the total period (t_w) that elapses until the emergency braking stage (t_eq <= t_w) and if the estimated speed equalization time (t_eq) is greater (t_eq > t_oa) than the audio/visual warning period (t_oa), calculating the minimum braking initiation distance (d_safe) with said second equality equation (equation 2).

12. An emergency braking method (100) according to claim 5, **characterized in that;** in the step of calculating (150) the latest and minimum braking initiation distance (d_safe) by means of selecting one of six different equations; if the estimated speed equalization time (t_eq) is greater than zero (t_eq>0) and if the estimated speed equalization time (t_eq) is smaller than or equal to (t_eq <= t_oa) the audio/visual warning period (t_oa), calculating the minimum braking initiation distance (d_safe) with said third equality equation (equation 3).

13. An emergency braking method (100) according to claim 6, **characterized in that;** in the step of calculating (150) the latest and minimum braking initiation distance (d_safe) by means of selecting one of six different equations; if the estimated speed equalization time (t_eq) is greater (t_eq > t_w) than the total period (t_w) that elapses until the emergency braking stage, calculating the minimum braking initiation distance (d_safe) with said fourth equality equation (equation 4).

14. An emergency braking method (100) according to claim 6, **characterized in that;** in the step of calculating (150) the latest and minimum braking initiation distance (d_safe) by means of selecting one of six different equations; if the estimated speed equalization time (t_eq) is smaller than or equal (t_eq <= t_w) to the total period (t_w) that elapses until the emergency braking stage and if the estimated speed equalization time (t_eq) is greater (t_eq > t_oa) than the audio/visual warning period (t_oa), calculating the minimum braking initiation distance (d_safe) with said fifth equality equation (equation 5).

15. An emergency braking method (100) according to claim 6, **characterized in that;** in the step of calculating (150) the latest and minimum braking initiation distance (d_safe) by means of selecting one of six different equations; if the estimated speed equalization time (t_eq) is greater than zero (t_eq>0) and if the estimated speed equalization time (t_eq) is smaller than or equal to (t_eq <= t_oa) the audio/visual warning period (t_oa), calculating the minimum braking initiation distance (d_safe) with said sixth equality equation (equation 6).

**Patentansprüche**

1. Notbremsverfahren (100) für Kraftfahrzeuge, das ein automatisches Abbremsen des Fahrzeugs ermöglicht, das ausgelöst wird, wenn der errechnete Abstand zwischen dem vorausfahrenden Fahrzeug kleiner als der Mindestabstand (d_z) ist, das die Bestimmung des Startzeitpunkts für die Bremsung durch Berechnung des Zeitpunkts ermöglicht, bis zum Geschwindigkeitsausgleich des Ego-Fahrzeugs und des vorausfahrenden Fahrzeugs, das die Bremsung zu diesem Zeitpunkt einleitet, das eine dreiphasige Bremsung innerhalb der Bremssequenz ermöglicht, **umfassend** die folgenden Verfahrensschritte;

- Empfangen (110) von Messdaten von einer Kamera (2) und einem Radar (3), die sich am Fahrzeug befinden,
- Berechnen (120) der Zeit bis zum Anhalten, falls die Bremssequenz gemäß den von der Kamera (2) und dem Radar (3) empfangenen Messdaten durch eine Steuereinheit (5) eingeleitet wird (falls die Bremssequenz begonnen hat); und **dadurch gekennzeichnet, dass**
- Berechnen (130) der Zeit, die verstrichen ist, bis zum Geschwindigkeitsausgleich des Ego-Fahrzeugs an das vorausfahrende Fahrzeug, falls die Bremssequenz gemäß den von der Kamera (2) und dem Radar (3) empfangenen Messdaten von der Steuereinheit (5) eingeleitet wird (falls die Bremssequenz begonnen hat),
- Feststellung (140), bei welcher Wam-/Bremsstufe der Zeitpunkt des Geschwindigkeitsausgleichs mit dem vorausfahrenden Fahrzeug eintritt.
- Berechnung (150) des spätesten und minimalen Bremseinleitungswegs (d_safe) durch Auswahl einer der sechs verschiedenen Gleichungen entsprechend dem Ergebnis der Vergleiche, ob die Stufe der Warnung/Bremsung, bei der der Geschwindigkeitsausgleichsmoment realisiert wird oder nicht, und der Moment, in dem das vorausfahrende Fahrzeug den Haltepunkt erreicht, im Bremsvorgang realisiert wird oder nicht,
- Starten (160) der Bremssequenz, wenn der augenblicklich gemessene Abstand zum vorausfahrenden Fahrzeug kleiner oder gleich dem berechneten Mindestbremsstartabstand ist,
- Rücksprung zum Anfang, um die Berechnung erneut durchzuführen, unter erneuter Beobachtung (170) der sich ändernden Fahrzeugdynamik.

2. Notbremsverfahren (100) nach Anspruch 1, **dadurch gekennzeichnet, dass** im Schritt der Berechnung (130) der Zeit, die bis zum Geschwindigkeitsausgleich mit dem vorausfahrenden Fahrzeug verstreicht, wenn die Bremssequenz begonnen hat, drei verschiedene Geschwindigkeitsausgleichszeiten für die akustische Warnstufe, haptische Warnstufe und die Notbremsstufe (Schlussbremsung) berechnet werden und nur eine dieser Zeiten verwendet wird.

3. Notbremsverfahren (100) nach Anspruch 2, **dadurch gekennzeichnet, dass** in dem Schritt der Berechnung (130) der Zeit, die bis zum Geschwindigkeitsausgleich mit dem vorausfahrenden Fahrzeug verstreicht, wenn die Bremssequenz begonnen hat die erste geschätzte Geschwindigkeitsausgleichszeit (t_eq1) mit der Gleichung (v-v_v)/(a_v-a); zweite geschätzte Geschwindigkeitsausgleichszeit (t_eq2) mit der Gleichung (v_v-v-a*t_oa+a_TB*t_oa)/(a_TB-a_v); die dritte geschätzte Geschwindigkeitsausgleichszeit (t_eq3) mit der Gleichung (v_v-v-a*t_oa+a_TB*t_oa)/(a_TB-a_v) berechnet wird.

4. Notbremsverfahren (100) nach Anspruch 1, **dadurch gekennzeichnet, dass** in dem Schritt des Herausfindens (140), in welcher die Warn-/Bremsstufe die Zeit des Geschwindigkeitsausgleichs mit dem vorausfahrenden Fahrzeug auftritt, die geschätzte Geschwindigkeitsausgleichszeit (t_eq) mit der Anhaltezeit des Fahrzeugs (t_stop) verglichen wird und bestimmt wird, ob die geschätzte Geschwindigkeitsausgleichszeit (t_eq) größer oder gleich der Anhaltezeit des Fahrzeugs (t_stop) ist.

5. Notbremsverfahren (100) nach Anspruch 1, **gekennzeichnet, durch;** in dem Schritt des Berechnens (150) des spätesten und minimalen Bremseinleitungsweges (d_safe) mittels Auswahl einer von sechs verschiedenen Gleichungen; Steuern der Anhaltezeit des vorausfahrenden Fahrzeugs (t_still), wenn die Anhaltezeit des vorausfahrenden Fahrzeugs (t_still) außerhalb der Bremssequenz liegt; Auswahl einer der ersten Gleichheitsgleichung **(Gleichung 1)** oder der zweiten Gleichheitsgleichung **(Gleichung 2)** oder der dritten Gleichheitsgleichung **(Gleichung 3).**

6. Notbremsverfahren (100) nach Anspruch 1, **gekennzeichnet, durch;** in dem Schritt des Berechnens (150) des spätesten und minimalen Bremseinleitungsweges (d_safe) mittels Auswahl einer von sechs verschiedenen Gleichungen; Steuerung der Anhaltezeit des vorausfahrenden Fahrzeugs (t_still), wenn die Anhaltezeit des vorausfahrenden Fahrzeugs (t_still) innerhalb der Bremssequenz liegt; Auswählen einer der vierten Gleichheitsgleichung **(Gleichung 4)** oder fünften Gleichheitsgleichung **(Gleichung 5)** oder sechsten Gleichheitsgleichung **(Gleichung 6).**

7. Notbremsverfahren (100) nach Anspruch 1, **gekennzeichnet, durch;** in dem Schritt des Berechnens (150) des spätesten und minimalen Bremseinleitungsweges (d_safe) mittels Auswahl einer von sechs verschiedenen Gleichungen; zusammen mit dem Bestimmen des Bereichs in der Sequenz, der dem geschätzten Geschwindigkeitsausgleichszeitpunkt (t_eq) entspricht, das Auswählen einer der ersten Gleichheitsgleichung **(Gleichung 1),** der zweiten Gleichheitsgleichung **(Gleichung 2)** oder der dritten Gleichheitsgleichung **(Gleichung 3)** vierten Gleichheitsgleichung **(Gleichung 4)** oder fünften Gleichheitsgleichung **(Gleichung 5)** oder sechsten Gleichheitsgleichung **(Gleichung 6).**

8. Notbremsverfahren (100) nach Anspruch 1, **dadurch gekennzeichnet, dass;** in dem Schritt des Berechnens (150) des spätesten und minimalen Bremseinleitungsweges (d_safe) mittels Auswahl einer von sechs verschiedenen Gleichungen, wenn die Beschleunigung des vorausfahrenden Fahrzeugs (a_v) kleiner als Null ist, die Anhaltezeit des Fahrzeugs (t_still) durch Tauchen der Geschwindigkeit des vorausfahrenden Fahrzeugs (v_v) durch die Beschleunigung des vorausfahrenden Fahrzeugs (a_v) ermittelt wird.

9. Notbremsverfahren (100) nach Anspruch 1, **dadurch gekennzeichnet, dass;** in dem Schritt des Berechnens (150) des spätesten und minimalen Bremseinleitungsweges (d_safe) mittels Auswahl einer von sechs verschiedenen Gleichungen; nach dem Berechnen der Anhaltezeit des Fahrzeugs (t still), die Steuereinheit (5) vergleicht, ob die Anhaltezeit des Fahrzeugs (t_still) kleiner als Null ist oder nicht und größer als die geschätzte Geschwindigkeitsausgleichszeit (t_eq) ist oder nicht.

10. Notbremsverfahren (100) nach Anspruch 5, **dadurch gekennzeichnet, dass;** in dem Schritt des Berechnens (150) des spätesten und minimalen Bremseinleitungsweges (d_safe) mittels Auswahl einer von sechs verschiedenen Gleichungen; wenn die geschätzte Geschwindigkeitsausgleichszeit (t_eq) größer ist als die Gesamtdauer (t_w), die bis zur Notbremsstufe verstreicht (t_eq > t_w), Berechnen des minimalen Bremseinleitungswegs (d_safe) mit der ersten Gleichung (Gleichung 1).

11. Notbremsverfahren (100) nach Anspruch 5, **gekennzeichnet, durch;** in dem Schritt des Berechnens (150) des spätesten und minimalen Bremseinleitungsweges (d_safe) mittels Auswahl einer von sechs verschiedenen Gleichungen; wenn die geschätzte Geschwindigkeitsausgleichszeit (t_eq) kleiner oder gleich der Gesamtdauer (t_w) ist, die bis zur Notbremsstufe vergeht (t_eq <= t_w), und wenn die geschätzte Geschwindigkeitsausgleichszeit (t_eq) größer ist (t_eq > t_oa) als die akustische/visuelle Warndauer (t_oa), Berechnen des minimalen Bremseinleitungswegs (d_safe) mit der zweiten Gleichung (Gleichung 2).

12. Notbremsverfahren (100) nach Anspruch 5, **dadurch gekennzeichnet, dass;** in dem Schritt des Berechnens (150) des spätesten und minimalen Bremseinleitungswegs (d_safe) mittels Auswahl einer von sechs verschiedenen Gleichungen; wenn die geschätzte Geschwindigkeitsausgleichszeit (t_eq) größer als Null ist (t_eq>0) und wenn die geschätzte Geschwindigkeitsausgleichszeit (t_eq) kleiner als oder gleich (t_eq <= t_oa) der akustischen/visuellen Warnperiode (t_oa) ist, Berechnen des minimalen Bremseinleitungswegs (d_safe) mit der dritten Gleichung (Gleichung 3).

13. Notbremsverfahren (100) nach Anspruch 6, **gekennzeichnet, durch;** in dem Schritt des Berechnens (150) des spätesten und minimalen Bremseinleitungsweges (d_safe) mittels Auswahl einer von sechs verschiedenen Gleichungen; wenn die geschätzte Geschwindigkeitsausgleichszeit (t_eq) größer ist (t_eq > t_w) als die Gesamtdauer (t_w), die bis zur Notbremsstufe verstreicht, Berechnen des minimalen Bremseinleitungswegs (d_safe) mit der vierten Gleichung (Gleichung 4).

14. Notbremsverfahren (100) nach Anspruch 6, **gekennzeichnet, durch;** in dem Schritt des Berechnens (150) des spätesten und minimalen Bremseinleitungswegs (d_safe) mittels Auswahl einer von sechs verschiedenen Gleichungen; wenn die geschätzte Geschwindigkeitsausgleichszeit (t_eq) kleiner oder gleich (t_eq <= t_w) der Gesamtdauer (t_w) ist, die bis zur Notbremsstufe verstreicht, und wenn die geschätzte Geschwindigkeitsausgleichszeit (t_eq) größer (t_eq > t_oa) als die akustische/visuelle Warndauer (t_oa) ist, Berechnen des minimalen Bremseinleitungswegs (d_safe) mit der fünften Gleichung (Gleichung 5).

15. Notbremsverfahren (100) nach Anspruch 6, **gekennzeichnet, durch** in dem Schritt des Berechnens (150) des spätesten und minimalen Bremseinleitungswegs (d_safe) mittels Auswahl einer von sechs verschiedenen Gleichungen; wenn die geschätzte Geschwindigkeitsausgleichszeit (t_eq) größer als Null ist (t_eq>0) und wenn die geschätzte Geschwindigkeitsausgleichszeit (t_eq) kleiner als oder gleich (t_eq <= t_oa) der akustischen/visuellen Warnperiode (t_oa) ist, Berechnen des minimalen Bremseinleitungswegs (d_safe) mit der sechsten Gleichung (Gleichung 6).

**Revendications**

1. Procédé de freinage d'urgence (100), pour véhicules à moteur, qui permet au véhicule de freiner d'une manière automatique qui est déclenchée lorsque la distance entre le véhicule devant est calculée comme étant inférieure à la distance minimale (d_z), permet de déterminer le temps de démarrage du freinage en calculant le temps où la vitesse du véhicule autonome et celle du véhicule devant sont égalisées, déclenche le freinage à ledit temps, permet le freinage triphasé dans la séquence de freinage, le procédé **comprenant** les étapes suivantes :

- recevoir (110) des données de mesure provenant d'une caméra (2) et d'un radar (3) situés sur le véhicule,
- calculer (120) le temps jusqu'à l'arrêt, dans le cas où la séquence de freinage est initiée selon les données de mesure reçues de la caméra (2) et le radar (3) par une unité de commande (5) (si la séquence de freinage a commencé) ; et **caractérisé en ce que**
- calculer (130) le temps écoulé jusqu'à ce que la vitesse du véhicule autonome soit égalisée avec celle du véhicule devant, dans le cas où la séquence de freinage est initiée selon les données de mesure reçues de la caméra (2) et le radar (3) par l'unité de commande (5) (si la séquence de freinage a commencé),
- trouver (140) à quel stade de l'avertissement/du freinage se produit le temps d'égalisation de la vitesse avec le véhicule devant,
- calculer (150) la distance d'initiation de freinage la plus tardive et minimum (d_safe) au moyen de la sélection de l'une des six équations différentes selon le résultat des comparaisons pour savoir si le stade d'avertissement/de freinage est en cours ou non lorsque le moment d'égalisation de la vitesse est réalisé ou non et que le moment où le véhicule devant atteint le point d'arrêt est réalisé ou non dans le processus de freinage,
- démarrer (160) la séquence de freinage si la distance au véhicule devant mesurée instantanément est inférieure ou égale à la distance minimum calculée de démarrage du freinage,
- revenir au début afin de refaire le calcul, en observant (170) à nouveau la dynamique changeante du véhicule,

**2.** Procédé de freinage d'urgence (100) selon la revendication 1, **caractérisé en ce que;** dans l'étape de calcul (130) du temps qui s'écoule jusqu'à ce que la vitesse soit égalisée avec le véhicule devant si la séquence de freinage a commencé ; calculer trois temps d'égalisation de la vitesse différents pour l'étape d'avertissement sonore, l'étape d'avertissement haptique et l'étape de freinage d'urgence (freinage final) et utiliser seulement un desdits temps.

**3.** Procédé de freinage d'urgence (100) selon la revendication 2, **caractérisé en ce que;** dans l'étape de calcul (130) du temps qui s'écoule jusqu'à ce que la vitesse soit égalisée avec le véhicule devant si la séquence de freinage a commencé ; calculer le premier temps d'égalisation de la vitesse estimé (t_eq1) avec l'équation (v-v_v)/(a_v-a) ; le deuxième temps d'égalisation de la vitesse estimé (t_eq2) avec l'équation (v_v-v-a*t_oa+a_TB*t_oa)/(a_TB-a_v) ; le troisième temps d'égalisation de la vitesse estimé (t_eq3) avec l'équation (v_v-v-a*t-oa+a_TB*t_oa)/(a_TB-a_v);

**4.** Procédé de freinage d'urgence (100) selon la revendication 1, **caractérisé en ce que;** dans l'étape de trouver (140) à quel stade de l'avertissement/du freinage se produit le temps d'égalisation de la vitesse avec le véhicule devant, comparer le temps estimé d'égalisation de la vitesse (t_eq) avec le temps d'arrêt du véhicule (t_stop), déterminer si le temps d'égalisation de la vitesse estimé (t_eq) est supérieur ou égal au temps d'arrêt du véhicule (t_stop).

**5.** Procédé de freinage d'urgence (100) selon la revendication 1, **caractérisé en ce que;** dans l'étape de calcul (150) de la distance d'initiation de freinage la plus tardive et minimum (d_safe) au moyen de la sélection d'une des six équations différentes ; contrôler le temps d'arrêt du véhicule devant (t still), si le temps d'arrêt du véhicule devant (t_still) est en dehors de la séquence de freinage ; sélectionner l'une de la première équation d'égalité **(équation 1),** la deuxième équation d'égalité **(équation 2)** ou la troisième équation d'égalité **(équation 3).**

**6.** Procédé de freinage d'urgence (100) selon la revendication 1, **caractérisé en ce que;** dans l'étape de calcul (150) de la distance d'initiation de freinage la plus tardive et minimum (d_safe) au moyen de la sélection d'une des six équations différentes ; contrôler le temps d'arrêt du véhicule devant (t still), si le temps d'arrêt du véhicule devant (t_still) est dans la séquence de freinage ; sélectionner l'une de la quatrième équation d'égalité **(équation 4),** la cinquième équation d'égalité **(équation 5)** ou la sixième équation d'égalité **(équation 6).**

**7.** Procédé de freinage d'urgence (100) selon la revendication 1, **caractérisé en ce que;** dans l'étape de calcul (150) de la distance d'initiation de freinage la plus tardive et minimum (d_safe) au moyen de la sélection d'une des six équations différentes ; ainsi que la détermination de la plage dans la séquence qui correspond au temps d'égalisation de la vitesse estimé (t_eq), sélectionner l'une de la première équation d'égalité **(équation 1),** la deuxième équation d'égalité **(équation 2)** ou la troisième équation d'égalité **(équation 3),** la quatrième équation d'égalité **(équation 4)** ou la cinquième équation d'égalité **(équation 5)** ou la sixième équation d'égalité **(équation 6).**

**8.** Procédé de freinage d'urgence (100) selon la revendication 1, **caractérisé en ce que;** dans l'étape de calcul (150) de la distance d'initiation de freinage la plus tardive et minimum (d_safe) au moyen de la sélection d'une des six équations différentes ; si l'accélération du véhicule devant (a_v) est inférieure à zéro, trouver le temps d'arrêt du véhicule (t_still) en divisant la vitesse du véhicule devant (v_v) par l'accélération du véhicule devant (a_v).

9. Procédé de freinage d'urgence (100) selon la revendication 1, **caractérisé en ce que;** dans l'étape de calcul (150) de la distance d'initiation de freinage la plus tardive et minimum (d_safe) au moyen de la sélection d'une des six équations différentes ; après avoir calculé le temps d'arrêt du véhicule (t_still), l'unité de commande (5) compare si le temps d'arrêt du véhicule (t_still) est inférieur à zéro ou non et est supérieur au temps d'égalisation de la vitesse estimé (t_eq) ou non.

10. Procédé de freinage d'urgence (100) selon la revendication 5, **caractérisé en ce que;** dans l'étape de calcul (150) de la distance d'initiation de freinage la plus tardive et minimum (d_safe) au moyen de la sélection d'une des six équations différentes ; si le temps estimé d'égalisation de la vitesse (t_eq) est supérieur à la période totale (t_w) qui s'écoule jusqu'à la phase de freinage d'urgence (t_eq > t_w), calculer la distance minimum d'initiation du freinage (d_safe) avec ladite première équation d'égalité (équation 1).

11. Procédé de freinage d'urgence (100) selon la revendication 5, **caractérisé en ce que;** dans l'étape de calcul (150) de la distance d'initiation de freinage la plus tardive et minimum (d_safe) au moyen de la sélection d'une des six équations différentes ; si le temps estimé d'égalisation de la vitesse (t_eq) est inférieur ou égal à la période totale (t_w) qui s'écoule jusqu'à la phase de freinage d'urgence (t_eq <= t_w), et si le temps estimé d'égalisation de la vitesse (t_eq) est supérieur (t_eq > t_oa) à la période d'avertissement sonore/visuel (t_oa), calculer la distance minimum d'initiation du freinage (d_safe) avec ladite deuxième équation d'égalité (équation 2).

12. Procédé de freinage d'urgence (100) selon la revendication 5, **caractérisé en ce que;** dans l'étape de calcul (150) de la distance d'initiation de freinage la plus tardive et minimum (d_safe) au moyen de la sélection d'une des six équations différentes ; si le temps estimé d'égalisation de la vitesse (t_eq) est supérieur (t_eq > 0) et si le temps estimé d'égalisation de la vitesse (t_eq) est inférieur ou égal (t_eq <= t_oa) à la période d'avertissement sonore/visuel (t_oa), calculer la distance minimum d'initiation du freinage (d safe) avec ladite troisième équation d'égalité (équation 3).

13. Procédé de freinage d'urgence (100) selon la revendication 6, **caractérisé en ce que;** dans l'étape de calcul (150) de la distance d'initiation de freinage la plus tardive et minimum (d_safe) au moyen de la sélection d'une des six équations différentes ; si le temps estimé d'égalisation de la vitesse (t_eq) est supérieur (t_eq > t_w) à la période totale (t_w) qui s'écoule jusqu'à la phase de freinage d'urgence, calculer la distance minimum d'initiation du freinage (d_safe) avec ladite quatrième équation d'égalité (équation 4).

14. Procédé de freinage d'urgence (100) selon la revendication 6, **caractérisé en ce que;** dans l'étape de calcul (150) de la distance d'initiation de freinage la plus tardive et minimum (d_safe) au moyen de la sélection d'une des six équations différentes ; si le temps estimé d'égalisation de la vitesse (t_eq) est inférieur ou égal (t_eq <= t_w) à la période totale (t_w) qui s'écoule jusqu'à la phase de freinage d'urgence, et si le temps estimé d'égalisation de la vitesse (t_eq) est supérieur (t_eq > t_oa) à la période d'avertissement sonore/visuel (t_oa), calculer la distance minimum d'initiation du freinage (d safe) avec ladite cinquième équation d'égalité (équation 5).

15. Procédé de freinage d'urgence (100) selon la revendication 6, **caractérisé en ce que;** dans l'étape de calcul (150) de la distance d'initiation de freinage la plus tardive et minimum (d_safe) au moyen de la sélection d'une des six équations différentes ; si le temps estimé d'égalisation de la vitesse (t_eq) est supérieur (t_eq > 0) et si le temps estimé d'égalisation de la vitesse (t_eq) est inférieur ou égal (t_eq <= t_oa) à la période d'avertissement sonore/visuel (t_oa), calculer la distance minimum d'initiation du freinage (d safe) avec ladite sixième équation d'égalité (équation 6).

Figure 1

**Figure 2**

100

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015066323 A1
- EP 2835292 A
- US 2015012204 A1
- DE 102005054064 A1
- WO 2004028857 A1
- US 7425043 B2